# EUROPÄISCHE PATENTANMELDUNG

(11) **EP 4 166 499 A2**
(43) Veröffentlichungstag der Anmeldung: **19.04.2023**
(21) Anmeldenummer: 22198989.0
(22) Anmeldetag: 30.09.2022
(51) Int. Cl.: C01B 3/16, C01B 3/34, C01B 3/50, C01B 32/50, C10K 3/04, C10J 3/66

(54) **VERFAHREN ZUR ERZEUGUNG VON WASSERSTOFF UND KOHLENDIOXID AUS ORGANISCHEN SUBSTANZEN**

(30) Priorität: 14.10.2021 DE 102021126595
(71) Anmelder: Karlsruher Institut für Technologie, 76131 Karlsruhe (DE)
(72) Erfinder: BOUKIS, Nikolaos, 76137 Karlsruhe (DE); VADARLIS, Athanasios Angelos, 76344 Eggenstein-Leopoldshafen (DE); SAUER, Jörg, 76135 Karlsruhe (DE)
(74) Vertreter: Rupprecht, Kay

(57) **Zusammenfassung**

Die vorliegende Erfindung betrifft ein mehrstufiges Verfahren zur Erzeugung von Wasserstoff und Kohlendioxid aus in wässrigen Lösungen gelösten oder suspendierten organischen Substanzen, bei dem organischen Substanzen in überkritischem Wasser vergast und danach die resultierende Produktmischung enthaltend Kohlenwasserstoffe zumindest einer Reformierung unterworfen wird.

## Beschreibung

Alle in der vorliegenden Anmeldung zitierten Dokumente sind durch Verweis vollumfänglich in die vorliegende Offenbarung einbezogen (= incorporated by reference in their entirety).

Die vorliegende Erfindung betrifft ein mehrstufiges Verfahren zur Erzeugung von Wasserstoff und Kohlendioxid aus in wässrigen Lösungen gelösten oder suspendierten organischen Substanzen, bei dem organischen Substanzen in überkritischem Wasser vergast und danach die resultierende Produktmischung enthaltend Kohlenwasserstoffe zumindest einer Reformierung unterworfen wird.

### Stand der Technik:

Für die energetische Nutzung wässriger Abfallströme, Schlämme und Biomassen eignet sich das Verfahren der Vergasung in überkritischem Wasser (abgekürzt SCWG für supercritical water gasification). Ohne Vortrocknung und mit hoher Energieeffizienz entsteht ein brennbares Gasgemisch aus Wasserstoff, Kohlenwasserstoffen und Kohlendioxid. Dies fällt primär bei einem sehr hohen Druck von über 221 bar an. Das Gasgemisch kann dadurch aufgefangen und zeitversetzt elektrifiziert werden.

Bedingt durch die Notwendigkeit die Klimaerwärmung zu reduzieren, steigt in jüngster Zeit die Nachfrage nach Verfahren, um aus regenerativen Quellen Wasserstoff und Kohlendioxid zu erzeugen. Wasserstoff wird eine wichtige Rolle bei der Energieversorgung mobiler Anwendungen (Fahrzeuge, Flugzeuge, Schiffe, Raketen) spielen. Regenerativ erzeugtes Kohlendioxid wird eine wichtige Rolle bei der Herstellung von Chemikalien und bei der Herstellung von Kerosin und anderen flüssigen Kraftstoffen spielen.

Um reinen Wasserstoff in hoher Ausbeute und Kohlendioxid in hoher Konzentration aus dem primären Produktgas des SCWG Prozesses zu gewinnen, sind nachfolgende Prozesse notwendig. Dabei spielt die besondere Zusammensetzung des primären Produktgases mit seiner hohen Wasserstoffkonzentration und die Ökonomie, verbunden mit der energetischen Effizienz, eine wichtige Rolle.

Das Verfahren der Vergasung organischer Materie in überkritischem Wasser ist bereits bekannt, gut untersucht und befindet sich an der Schwelle der Kommerzialisierung; eine typische Zusammensetzung des primären Produktgases bei Vergasung einer Lösung von Wasser und Ethanol enthält beispielsweise jeweils ca. 46 Vol.-% H₂, 25 Vol.-% Methan, 20 Vol.-% CO₂, 0,8 Vol.-% CO und 6 Vol.-% Kohlenwasserstoffe mit zwei oder mehr C-Atomen. Ein Dokument, das als Stand der Technik genannt werden kann ist: N. Boukis und I. K. Stoll, "Gasification of Biomass in Supercritical Water, Challenges for the Process Design - Lessons Learned from the Operation Experience of the First Dedicated Pilot Plant", Processes 2021, 9, 455.

Die Reformierung von Kohlenwasserstoffen, allen voran das sogenannte Methan Steam Reforming, ist eine sehr weit verbreitete Technologie. Damit wird der Großteil des in der Industrie benötigten Wasserstoffs aus Erdgas produziert.

Nachteilig am bisherigen Stand der Technik ist, dass die primären Produktgase des SCWG-Prozesses nicht ohne weiteres geeignet sind, reinen Wasserstoff in hoher Ausbeute und Kohlendioxid in hoher Konzentration zu gewinnen.

Insofern existieren ausgehend von dem bisherigen Stand der Technik noch erhebliche Verbesserungspotentiale.

Aufgabe der vorliegenden Erfindung war es demgemäß, den Stand der Technik zu verbessern bzw. Möglichkeiten zu finden, die dessen Nachteile nicht mehr aufzuweisen.

Insbesondere sollte es ermöglicht werden, ausgehend von einer Vergasung von organischen Substanzen in überkritischem Wasser reinen Wasserstoff in hoher Ausbeute und Kohlendioxid in hoher Konzentration zu gewinnen.

Es war dabei Ziel sowohl entsprechende Verfahren zu finden, als auch Anlagen, mit denen entsprechende Verfahren durchgeführt werden können.

Weitere Aufgabenstellungen ergeben sich für den Fachmann aus der nachfolgenden Beschreibung.

Gelöst werden diese und andere Aufgaben im Rahmen der vorliegenden Erfindung durch die Gegenstände der unabhängigen Ansprüche.

Bevorzugte Ausgestaltungen ergeben sich aus den abhängigen Ansprüchen sowie der nachfolgenden Beschreibung.

Im Rahmen der vorliegenden Erfindung sind alle Mengenangaben, sofern nicht anders angegeben, als Gewichtsangaben zu verstehen.

Im Rahmen der vorliegenden Erfindung bedeutet der Begriff "Umgebungstemperatur" eine Temperatur von 20°C. Temperaturangaben sind, soweit nicht anders angegeben, in Grad Celsius (°C).

Sofern nichts Anderes angegeben wird, werden die angeführten Reaktionen bzw. Verfahrensschritte bei Umgebungsdruck (=Normaldruck/Atmosphärendruck), d.h. bei 1013 mbar, durchgeführt.

Druckangaben im Rahmen der vorliegenden Erfindung, solange nichts Anderes angegeben ist, bedeuten absolute Druckangaben, d.h. x bar bedeutet x bar absolut (barₐ) und nicht x bar gauge.

Im Rahmen der vorliegenden Erfindung bedeutet der Begriff "SCWG" die Vergasung einer organischen Substanz (oder Mischung von Substanzen) in überkritischem Wasser (supercritical water gasification), unter Bildung von hauptsächlich CH4, CO₂ und H₂, bei erhöhten Temperaturen, bevorzugt bei 500-750°C, besonders bevorzugt 550 bis 700°C, insbesondere bei 550 bis 650°C, und bei erhöhtem Druck von 221 bis 400 bar, bevorzugt 250 bis 350 bar. Im Rahmen der vorliegenden Erfindung wird das Aufheizen des Eduktstroms, bevorzugt über Vorwärmer und/oder Wärmetauscher, und die Druckerzeugung, bevorzugt über eine Hochdruckpumpe, mit zur SCWG gezählt, sofern nicht anders angegeben.

Im Rahmen der vorliegenden Erfindung bedeutet der Begriff "Pre-Reformierung" (manchmal auch "Pre-Reforming" genannt) die Spaltung von im Produktgas der SCWG vorhandenen Kohlenwasserstoffen, insbesondere CH4 und höhere Kohlenwasserstoffe, wie beispielsweise C₂H₄, C₂H₆, C₃H₆ und C₃H₈ und gegebenenfalls andere, bei erhöhten Temperaturen, bevorzugt bei 450-650°C, insbesondere bei 500 bis 600°C, und bei erhöhtem Druck von 10 bis 50 bar, bevorzugt 20 bis 40 bar, und mit einem geeigneten Katalysator, bevorzugt auf Basis von Nickel als aktiven Material, besonders bevorzugt Nickel auf einem Trägermaterial, insbesondere Ni auf La₂O₃-CeO₂-ZrO₂.

Im Rahmen der vorliegenden Erfindung bedeutet der Begriff "Reformierung" (manchmal auch "Reforming" genannt)
- entweder die Umsetzung von nach der Pre-Reformierung verbleibendem Methan (und gegebenenfalls verbleibenden Spuren höherer Kohlenwasserstoffe) mit Wasserdampf unter Bildung von Wasserstoff und Kohlenoxiden (auch (Methan-)Dampfreformierung genannt), bei erhöhten Temperaturen, bevorzugt bei über 750°C, insbesondere bei 700 bis 950°C, und bei erhöhtem Druck von 10 bis 50 bar, bevorzugt 20 bis 40 bar, in Varianten bevorzugt bei 25 bis 35 bar, zum Beispiel 30 bar, und mit einem geeigneten Katalysator, bevorzugt auf Basis von Nickel als aktiven Material, besonders bevorzugt Nickel auf einem Trägermaterial, insbesondere Ni auf Al₂O₃, MgAl₂O₄, CaO, SiO₂ oder Mischungen davon,
- oder die einstufige Umsetzung von im Produktgas der SCWG vorhandenen Kohlenwasserstoffen (Methan und höheren Kohlenwasserstoffen) bei erhöhten Temperaturen mit Wasserdampf unter Bildung von Wasserstoff und Kohlenoxiden (auch Dampfreformierung genannt), bevorzugt bei 750-800°C und 20-30 bar Druck, und mit einem geeigneten Katalysator Ni geträgert auf Al₂O₃, La₂O₃, CaO, ZrO₂ oder Mischungen davon.
   Welche der beiden Bedeutungen jeweils gemeint ist, oder ob es in dem betreffenden Zusammenhang relevant ist, ergibt sich für den Fachmann jeweils ohne weiteres aus dem Zusammenhang, falls es nicht explizit gesagt wird.

Im Rahmen der vorliegenden Erfindung bedeutet der Begriff "Wassergas-Shift-Reaktion" (auch WGS-Reaktion) die Reaktion von Kohlenmonoxid mit Wasserdampf zu Kohlendioxid und Wasserstoff bei erhöhten Temperaturen, bevorzugt bei 180 bis 320°C, besonders bevorzugt bei 200 bis 300°C, insbesondere bei etwa 240°C, und bei erhöhtem Druck von 10 bis 50 bar, bevorzugt 20 bis 40 bar, und mit einem geeigneten Katalysator, bevorzugt FeCrSO₄.

Im Rahmen der vorliegenden Erfindung werden die Begriffe "Anlage", "Einheit" und "Vorrichtung" gelegentlich synonym benutzt. Ebenso kann ein "Reaktor" als Vorrichtung bzw. Einheit bezeichnet werden.

Gegenstand der vorliegenden Erfindung ist insbesondere ein mehrstufiges Verfahren zur Erzeugung von Wasserstoff und Kohlendioxid aus in wässrigen Lösungen gelösten oder suspendierten organischen Substanzen, bei dem die organischen Substanzen zunächst in überkritischem Wasser vergast werden. Danach werden die Produkte dieses Verfahren(schritt)s einer Reformierung bei bis zum 900°C unterworfen und anschließend die Temperatur des Produktes der Reformierung reduziert. Schließt eine Wassergasshift-Reaktion an, wird auf niedrigstens 180°C, bevorzugt auf 180 bis 320°C reduziert, schließt keine Wassergasshift-Reaktion an, wird auf niedrigstens Umgebungstemperatur reduziert.

Ein Teil, für den Fall einer anschließenden WGS-Reaktion bevorzugt 5 bis 30, besonders bevorzugt 5 bis 15%, der bei Temperaturreduzierung nach der Reformierung freiwerdenden Enthalpie, wird für die Aufheizung des in Schritt a) eingeleiteten Eduktstroms genutzt, bevorzugt mittels mindestens einem Wärmetauscher.

Ein Teil, für den Fall keiner anschließenden WGS-Reaktion bevorzugt 5 bis 30, besonders bevorzugt 5 bis 15%, der bei Temperaturreduzierung nach der Reformierung freiwerdenden Enthalpie, wird für die Aufheizung des in Schritt a) eingeleiteten Eduktstroms genutzt, bevorzugt mittels mindestens einem Wärmetauscher.

Der Teil der Energie, der für die Aufheizung des in Schritt a) eingeleiteten Eduktstroms genutzt wird, kann, statt über die Enthalpie, auch in thermischer Energie/Zeit, also W, ausgedrückt werden. In diesem Falle werden, falls im Verfahren eine WGS-Reaktion ausgeführt wird, bevorzugt rund 8 bis 24%, besonders bevorzugt 10 bis 18%, bezogen auf den aus dem Reformierungsreaktor austretenden Stoffstrom, der Leistung zur Aufheizung des in Schritt a) eingeleiteten Eduktstroms genutzt. Zudem werden, falls im Verfahren eine WGS-Reaktion ausgeführt wird, in diesem Falle bevorzugt rund 25 bis 45%, besonders bevorzugt 30 bis 40%, bezogen auf den aus dem WGS-Reaktor austretenden Stoffstrom, der Leistung zur Aufheizung des in Schritt a) eingeleiteten Eduktstroms genutzt. In diesem Falle werden, falls im Verfahren keine WGS-Reaktion ausgeführt wird, bevorzugt rund 35 bis 60%, besonders bevorzugt 40 bis 55%, bezogen auf den aus dem Reformierungsreaktor austretenden Stoffstrom, der Leistung zur Aufheizung des in Schritt a) eingeleiteten Eduktstroms genutzt. Dies gilt selbstverständlich sinngemäß und wo anwendbar auch für die folgende, detaillierte Verfahrensbeschreibung.

Die vorliegende Erfindung stellt mithin ein integriertes Verfahren aus Vergasung organischer Substanzen in überkritischem Wasser gekoppelt mit Reformierung der nach der SCWG verbleibenden Kohlenwasserstoffe und Nutzung von nach der Reformierung freiwerdenden Enthalpie dar.

Bevorzugt werden die SCWG und die übrigen Verfahrensschritte bei den oben dargestellten Drucken durchgeführt.

Bevorzugt wird demgemäß die SCWG in Schritt a) bei einem Druck von 221 bar bis 400 bar durchgeführt und der Druck danach vor der Durchführung der Reformierungs- und gegebenenfalls Wassergas-Shift-Reaktionen auf 10 bar bis 50 bar erniedrigt und für den weiteren Verlauf des Verfahrens, bis zur Aufarbeitung der Produktgase bei diesem Druck gehalten.

Üblicherweise, und daher in Varianten der vorliegenden Erfindung bevorzugt, erfolgt die Reformierung in zwei Schritten, nämlich zunächst einer Pre-Reformierung und dann der eigentlichen Reformierung.

In weiteren bevorzugten Varianten der vorliegenden Erfindung wird anschließend an die Reformierung, unabhängig davon, ob diese Einstufig erfolgt oder in zwei Schritten, das Produkt der Reformierung(en) einer Wassergas-Shift-Reaktion bei 180°C bis 320°C unterworfen und in bevorzugten Ausgestaltungen der vorliegenden Erfindung anschließend die Temperatur des Produkts aus der Reaktion auf niedrigstens Umgebungstemperatur reduziert und ein Teil, bevorzugt 5 bis 30, besonders bevorzugt 5 bis 15%, der bei Temperaturreduzierung nach der Wassergas-Shift-Reaktion freiwerdenden Enthalpie für die Aufheizung des in Schritt a) eingeleiteten Eduktstroms genutzt, bevorzugt mittels mindestens einem Wärmetauscher.

In bevorzugten Varianten der vorliegenden Erfindung erfolgt zwischen der SCWG und der Wassergas-Shift-Reaktion kein zusätzlicher Kompressionsschritt. Das bedeutet, dass zwischen den einzelnen Reaktionen/Reaktoren im Rahmen der vorliegenden Erfindung Druck und Temperatur jeweils den nötigen, bevorzugt optimalen, Bedingungen angepasst werden, allerdings ohne zusätzlichen Kompressionsschritt. Der einzige Kompressionsschritt, der bei dem Verfahren der vorliegenden Erfindung benötigt wird steht am Anfang und wird im Rahmen dieser Erfindung als Teil der SCWG aufgefasst, denn erhöhter Druck und erhöhte Temperatur sind für die Durchführung einer SCWG notwendig.

Ein besonders bevorzugtes Verfahren der vorliegenden Erfindung zur Erzeugung von Wasserstoff und Kohlendioxid aus in wässrigen Lösungen gelösten oder suspendierten organischen Substanzen umfasst dabei, in der angegebenen Reihenfolge, die folgenden Schritte oder besteht aus diesen:
a) Vergasen von organischen Substanzen in überkritischem Wasser,
b) Unterwerfen der aus a) resultierenden Produktmischung enthaltend Kohlenwasserstoffe einer Reformierung bei bis zu 900°C umfassend die Einzelschritte oder bestehend aus diesen:
   b1) Pre-Reformierung
      und anschließend
   b2) Reformierung der Produktmischung aus b1),
bx) Reduzieren der Temperatur des Produkts aus b2) auf niedrigstens 180°C, bevorzugt auf 180 bis 320°C, wobei ein Teil, bevorzugt 5 bis 30, besonders bevorzugt 5 bis 15%, der bei Temperaturreduzierung nach der Reformierung freiwerdenden Enthalpie für die Aufheizung des in Schritt a) eingeleiteten Eduktstroms genutzt wird, bevorzugt mittels mindestens einem Wärmetauscher,
c) Unterwerfen des Produkts aus b2) einer Wassergas-Shift-Reaktion bei 180°C bis 320°C, und wobei zwischen a) und c) kein zusätzlicher Kompressionsschritt erfolgt,
cx) Reduzieren der Temperatur des Produkts aus c) auf niedrigstens Umgebungstemperatur und wobei bevorzugt ein Teil, bevorzugt 5 bis 30, besonders bevorzugt 5 bis 15%, der bei Temperaturreduzierung nach der Wassergas-Shift-Reaktion freiwerdenden Enthalpie für die Aufheizung des in Schritt a) eingeleiteten Eduktstroms genutzt wird, bevorzugt mittels mindestens einem Wärmetauscher.

Zwar ist es möglich die Produkte aus Schritt b) oder aus Schritt c), abhängig von dem gewünschten Anwendungszweck, in manchen Ausführungsformen direkt zu verwenden, jedoch wird in aller Regel eine weitere Aufarbeitung erfolgen.

Demgemäß umfasst das erfindungsgemäße Verfahren in bevorzugten Ausführungsformen als einen weiteren Verfahrensschritt d) das Aufarbeiten der aus b) oder c) stammenden Produktgase.

Das Aufarbeiten des Produktes aus c), das im Wesentlichen ein Gemisch aus Wasser, Wasserstoff und CO₂ ist, kann dabei mit fachüblichen Verfahren/Methoden erfolgen.

In bevorzugten Ausgestaltungen der vorliegenden Erfindung umfasst der Aufarbeitungsschritt d) mehrere Unterschritte in der angegebenen Reihenfolge:
d1) Abkühlung des Produktgemisches aus b) oder c) auf Umgebungstemperatur und Abtrennung des Wassers, bevorzugt mittels eines Autoklaven, insbesondere einem Autoklaven mit einer Vorrichtung zur Detektion der Phasengrenze und entsprechend gesteuerten Ventilen;
d2) Aufspaltung des nach d1) verbleibenden H₂/CO₂-Gemisches, bevorzugt mittels Trennmembranen oder Absorption des CO₂ in geeigneten flüssigen oder festen Absorbern, bevorzugt ausgewählt aus der Gruppe bestehend aus TEGDME (tetra-ethylene-glycol-dimethyl-ether), Aminen wie zum Beispiel bevorzugt aber nicht beschränkt darauf Monoisopropanolamin, 3-Amino-1-propanol, Diethanolamin, Monoethanolamin, Diglycolamin, Methyldiethanolamin, Wasser und Mischungen davon, insbesondere TEGDME, Monoethanolamin, Diglycolamin, Methyldiethanolamin und/oder Wasser;
d2a) Auffangen des CO₂ in konzentrierter Form, optional dabei ableiten und/oder speichern;
d2b) Auffangen des H₂ als Gasphase in vorkomprimierter Form oder Auffangen und nachkomprimieren auf das gewünschte Niveau.
In diesem Fall ersetzt Schritt d1) den oben angeführten Schritt cx).

Die bei dem Schritt d1) freiwerdende Enthalpie wird, wie bereits beschrieben bevorzugt für die Aufheizung des in Schritt a) eingeleiteten Eduktstroms genutzt, insbesondere mittels mindestens einem Wärmetauscher.

Der Wasserstoff in vorkomprimierter Form kann dann beispielsweise direkt weiterverwendet werden, bevorzugt in direkt angeschlossenen Anlagen/Verfahren oder in dieser Form in geeigneten Behältern gespeichert werden. Der nachkomprimierte Wasserstoff kann beispielsweise in geeigneten Behältern gespeichert werden und für das weitere Verwenden gelagert oder vertrieben werden.

Ein besonders bevorzugtes Verfahren der vorliegenden Erfindung zur Erzeugung von Wasserstoff und Kohlendioxid aus in wässrigen Lösungen gelösten oder suspendierten organischen Substanzen umfasst dabei, in der angegebenen Reihenfolge, die folgenden Schritte oder besteht aus diesen:
a) Vergasen von, bevorzugt 5 bis 20 Gew.-%, organischen Substanzen in überkritischem Wasser bei kontinuierlicher Eduktförderung, die bevorzugt über eine Hochdruckpumpe erfolgt, und wobei die SCWG insbesondere bei Temperaturen zwischen 500 bis 750°C, und bei erhöhtem Druck von 20 bis 40 bar erfolgt, optional aber bevorzugt unter Abtrennung von anorganischen Salzen und schwefelhaltigen Komponenten sowie eventuellen reaktionsrückständen wie Teeren,
b) Unterwerfen der aus a) resultierenden Produktmischung enthaltend Kohlenwasserstoffe einer Reformierung umfassend die Einzelschritte oder bestehend aus diesen:
   b1) Pre-Reformierung, insbesondere bei Temperaturen von 450 bis 650°C, und bei Druck von 10 bis 50 bar und mit einem geeigneten Katalysator, bevorzugt auf Basis von Nickel als aktiven Material,
      und anschließend
   b2) Reformierung der Produktmischung aus b1), insbesondere bei Temperaturen von über 750°C bis 950°C und bei Druck von 10 bis 50 bar, und mit einem geeigneten Katalysator, bevorzugt auf Basis von Nickel als aktiven Material,
bx) Reduzieren der Temperatur des Produkts aus b2) auf niedrigstens 180°C, bevorzugt auf 180 bis 320°C, wobei ein Teil, bevorzugt 5 bis 30, besonders bevorzugt 5 bis 15%, der bei Temperaturreduzierung nach der Reformierung freiwerdenden Enthalpie für die Aufheizung des in Schritt a) eingeleiteten Eduktstroms genutzt wird, bevorzugt mittels mindestens einem Wärmetauscher,
c) Unterwerfen des Produkts aus b2) einer Wassergas-Shift-Reaktion, bei Temperaturen von 180 bis 320°C und bei Druck von 10 bis 50 bar und mit einem geeigneten Katalysator, bevorzugt FeCrSO₄,
d) Aufarbeiten der aus c) stammenden Produktgase, die im Wesentlichen eine Mischung aus Wasser, H₂ und CO₂ sind,
wobei der Aufarbeitungsschritt d) bevorzugt mehrere Unterschritte in der angegebenen Reihenfolge umfasst:
d1) Abkühlung des Produktgemisches aus c) auf Umgebungstemperatur und Abtrennung des Wassers, bevorzugt mittels eines Autoklaven, besonders bevorzugt einem Autoklaven mit einer Vorrichtung zur Detektion der Phasengrenze und entsprechend gesteuerten Ventilen, und wobei bevorzugt ein Teil, bevorzugt 5 bis 30, besonders bevorzugt 5 bis 15%, der bei Temperaturreduzierung nach der Wassergas-Shift-Reaktion freiwerdenden Enthalpie für die Aufheizung des in Schritt a) eingeleiteten Eduktstroms genutzt wird, bevorzugt mittels mindestens einem Wärmetauscher,
d2) Aufspaltung des nach d1) verbleibenden H₂/CO₂-Gemisches, bevorzugt mittels Trennmembranen oder Absorption des CO₂ in geeigneten flüssigen oder festen Absorbern, und
d2a) Auffangen des CO₂ und ableiten und/oder speichern in konzentrierter Form,
d2b) Auffangen des H₂ als Gasphase in vorkomprimierter Form, bei einem Druck von 10 bis 50 bar, oder auffangen und nachkomprimieren auf das gewünschte Niveau,
und wobei zwischen a) und c) kein zusätzlicher Kompressionsschritt erfolgt.

Weiterhin Gegenstand der vorliegenden Erfindung ist eine Anlage zur Erzeugung von Wasserstoff und Kohlendioxid aus in wässrigen Lösungen gelösten oder suspendierten organischen Substanzen umfassend die folgenden Bestandteile:
0) Hochdruck-Pumpe und Heizvorrichtung, konfiguriert zur Vorbehandlung des Eduktstroms enthaltend die organischen Substanzen und Wasser, insbesondere zur Einstellung des Druckes und der Temperatur,
A) Reaktor konfiguriert zur Vergasung der organischen Substanzen in überkritischem Wasser (also zur Durchführung einer SCWG-Reaktion),
B) mindestens einen Reaktor konfiguriert zur Reformierung der aus A) abgeleiteten Produktgase stromabwärts nach dem SCWG-Reaktor A) angeordnet ist, und eine Vorrichtung, bevorzugt mindestens ein Wärmetauscher, zur Erwärmung des Eduktstroms mittels eines Teils, bevorzugt 5 bis 30, besonders bevorzugt 5 bis 15%, der bei Temperaturreduzierung nach der Reformierung freiwerdenden Enthalpie.

Ein Teil, für den Fall eines anschließenden WGS-Reaktors bevorzugt 5 bis 30, besonders bevorzugt 5 bis 15%, der bei Temperaturreduzierung nach der Reformierung freiwerdenden Enthalpie, kann bei dieser Anlage für die Aufheizung des in Schritt a) eingeleiteten Eduktstroms genutzt werden, bevorzugt mittels mindestens einem Wärmetauscher.

Ein Teil, für den Fall keines anschließenden WGS-Reaktors bevorzugt 5 bis 30, besonders bevorzugt 5 bis 15%, der bei Temperaturreduzierung nach der Reformierung freiwerdenden Enthalpie, kann bei dieser Anlage für die Aufheizung des in Schritt a) eingeleiteten Eduktstroms genutzt werden, bevorzugt mittels mindestens einem Wärmetauscher.

Der Teil der Energie, der für die Erwärmung des Eduktstroms genutzt wird, kann, statt über die Enthalpie, auch in thermischer Energie/Zeit, also W, ausgedrückt werden. In diesem Falle werden, falls ein WGS-Reaktors angeordnet ist, bevorzugt rund 8 bis 24%, besonders bevorzugt 10 bis 18%, bezogen auf den aus dem Reformierungsreaktor austretenden Stoffstrom, der Leistung zur Aufheizung des in Schritt a) eingeleiteten Eduktstroms genutzt. Zudem werden, falls ein WGS-Reaktor angeordnet ist, in diesem Falle bevorzugt rund 25 bis 45%, besonders bevorzugt 30 bis 40%, bezogen auf den aus dem WGS-Reaktor austretenden Stoffstrom, der Leistung zur Erwärmung des Eduktstroms genutzt. In diesem Falle werden, falls kein WGS-Reaktor angeordnet ist, bevorzugt rund 35 bis 60%, besonders bevorzugt 40 bis 55%, bezogen auf den aus dem Reformierungsreaktor austretenden Stoffstrom, der Leistung zur Erwärmung des Eduktstroms genutzt. Dies gilt selbstverständlich sinngemäß und wo anwendbar auch für die folgende, detaillierte Anlagenbeschreibung.

Die Heizvorrichtung bei 0) wird dabei in bevorzugten Ausführungsformen der vorliegenden Erfindung beim Anfahren des Prozesses genutzt, um den Eduktstrom auf die für die SCWG nötige Temperatur aufzuheizen und im laufenden Betrieb wird diese Heizvorrichtung dann in ihrer Leistung reduziert, da die Erwärmung des Eduktstroms durch einen Teil der nach der Reformierung verfügbaren Enthalpie des Produktgases unterstützt wird. Selbstverständlich gilt dies sowohl für die erfindungsgemäße Anlage, als auch das erfindungsgemäße Verfahren.

In bevorzugten Varianten der vorliegenden Erfindung umfasst die erfindungsgemäße Anlage nicht einen einzelnen Reaktor B) zur Reformierung, sondern zwei einander nachgeschaltete Reaktoren B) für die Reformierung, wobei ein erster Reaktor B1) konfiguriert ist zur Durchführung einer Pre-Reformierung ist, und ein stromabwärts danach angeordneter zweiter Reaktor B2) konfiguriert ist zur Durchführung einer Reformierung der aus Reaktor B1) erhaltenen Produktmischung.

In weiteren bevorzugten Ausführungsformen der vorliegenden Erfindung ist stromabwärts nach dem Reformierungsreaktor B) oder den Reformierungsreaktoren B1) und B2) zusätzlich ein weiterer Reaktor C), der zur Durchführung einer Wassergas-Shift-Reaktion konfiguriert ist angeordnet und optional eine Vorrichtung, bevorzugt mindestens ein Wärmetauscher, zur Erwärmung der Eduktstroms mittels eines Teils, bevorzugt 5 bis 30, besonders bevorzugt 5 bis 15%, der bei Temperaturreduzierung nach der Wasser-Gas-Shift-Reaktion freiwerdenden Enthalpie.

In noch weiteren bevorzugten Ausführungsformen der vorliegenden Erfindung ist abgesehen von der Hochdruck-Pumpe 0) keine weitere Hochdruck-Pumpe vorhanden.

In weiteren bevorzugten Ausführungsformen der vorliegende Erfindung ist stromabwärts nach Reaktor C) eine Vorrichtung angeordnet, die konfiguriert ist, das aus C) erhaltene Gemisch aus Wasser, H₂ und CO₂ aufzuarbeiten und abzuleiten. Diese Vorrichtung kann dabei eine einzige Vorrichtung sein, oder aufgeteilt in mehrere Teilvorrichtungen/Untereinheiten. Beispielsweise kann die Abtrennung des Wassers bevorzugt mittels eines Autoklaven, insbesondere einem Autoklaven mit einer Vorrichtung zur Detektion der Phasengrenze und entsprechend gesteuerten Ventilen, erfolgen und die Aufspaltung des nach der Wasserabtrennung verbleibenden H₂/CO₂-Gemisches bevorzugt mittels Trennmembranen oder Absorption des CO₂ in geeigneten flüssigen oder festen Absorbern erfolgen.

Es versteht sich, dass die erfindungsgemäße Anlage die entsprechenden Zu- und Ableitungen für die Edukte und Produkte umfasst. Genauso versteht es sich von selbst, dass die Anlage die notwendigen Druck- und Temperaturregelungsvorrichtungen umfasst (Kompressor aber nur vor der SCWG).

Die erfindungsgemäß eingesetzten Reaktoren für die SCWG können im Prinzip aus allen für die Erfordernisse der Reaktion, insbesondere auch im Hinblick auf die oben genannten Drücke und Temperaturen, geeigneten Materialien bestehen und diese entsprechend durch den Fachmann ausgewählt werden.

Bevorzugte Materialien sind, Alloy 602, Alloy 617 und Alloy 625, insbesondere Alloy 602 oder Alloy 617.

Die erfindungsgemäß eingesetzten Reaktoren für das Pre-Reforming können im Prinzip aus allen für die Erfordernisse der Reaktion, insbesondere auch im Hinblick auf die oben genannten Drücke und Temperaturen, geeigneten Materialien bestehen und diese entsprechend durch den Fachmann ausgewählt werden.

Bevorzugte Materialien sind spezielle Edelstähle oder Ni-Basislegierungen wie Alloy 625, Alloy 602, Alloy 617.

Die erfindungsgemäß eingesetzten Reaktoren für das Reforming können im Prinzip aus allen für die Erfordernisse der Reaktion, insbesondere auch im Hinblick auf die oben genannten Drücke und Temperaturen, geeigneten Materialien bestehen und diese entsprechend durch den Fachmann ausgewählt werden.

Bevorzugte Materialien sind Alloy 602 und Alloy 617.

Die erfindungsgemäß eingesetzten Reaktoren für die Wassergas-Shift-Reaktion können im Prinzip aus allen für die Erfordernisse der Reaktion, insbesondere auch im Hinblick auf die oben genannten Drücke und Temperaturen, geeigneten Materialien bestehen und diese entsprechend durch den Fachmann ausgewählt werden. Bevorzugte Materialien sind gängige Edelstähle (z.B. 316).

Insbesondere ist es im Rahmen der vorliegenden Erfindung auch bevorzugt, wenn die erfindungsgemäße Anlage inklusive aller Reaktoren und Rohrverbindungen auf einem einzigen Gelände angeordnet ist. Es ist von besonderem energetischem Vorteil und daher bevorzugt, wenn die Anlage so kompakt wie möglich und die Rohrwege zwischen den einzelnen Reaktoren so gering wie möglich sind.

Dies ist insbesondere deswegen bevorzugt, weil die erfindungsgemäße Kopplung von SCWG und Reformierung die Nutzung zumindest eines Teils der bei Abkühlung der Temperatur nach der Reformierung freiwerdenden Enthalpie zur Erwärmung des Eduktstroms der SCWG vorsieht.

Es ist im Rahmen der vorliegenden Erfindung möglich, organische Substanzen verschiedener Herkunft zu mischen und dann gemeinsam den erfindungsgemäßen mehrstufigen Verfahren und/oder der erfindungsgemäßen Anlage aufzugeben. Diese Mischungen können, sofern sie nicht ohnehin als Mischung anfallen (wie beispielsweise Biomasseabfälle), vor der Eduktzuleitung hergestellt werden, in der Eduktzuleitung hergestellt werden, oder im SCWG-Reaktor erzeugt werden, wenn mehrere verschiedene Eduktzuleitungen vorhanden sind.

Ähnlich ist es möglich, die nach Schritt c) bzw. Reaktor C) anfallende Produktmischung und deren Bestandteile auf verschiedene Art und Weise abzuleiten. Üblicherweise ist es bevorzugt, unter anderem auch weil es energetisch vorteilhaft sein kann, die drei Bestandteile zu trennen und getrennt voneinander abzuleiten; allerdings ist es ebenfalls möglich das Produktgemisch so wie es nach c) bzw. C) anfällt zu speichern und zu lagern (d.h. unter Druck).

Eine besonders bevorzugte erfindungsgemäße Vorgehensweise umfassend entsprechende Verfahrensmerkmale und Anlagenmerkmale, die in dem erfindungsgemäßen Verfahren und der erfindungsgemäßen Anlage eingesetzt werden, wird wie folgt beschrieben:
Dieses besonders bevorzugte Vorgehen beinhaltet vier Reaktionen, die engverzahnt nacheinander in mindestens vier Reaktoren ablaufen.

Entsprechend ist es in besonders bevorzugten Varianten der vorliegenden Erfindung bevorzugt, wenn alle vier Schritte a), b1), b2) und c) ausgeführt werden bzw. wenn die Anlage alle vier Reaktoren A), B1), B2) und C) umfasst.

Zwischen den Reaktionen dieses besonders bevorzugten Vorgehens werden Druck und Temperatur auf die jeweils optimalen Bedingungen angepasst, jedoch ohne einen zusätzlichen Kompressionsschritt. Die Temperatur wird in den ersten drei Reaktoren zwischen 500°C und 900°C eingestellt und mit Hilfe von Vorwärmern und Wärmetauschern energiesparend reguliert. Der vierte Reaktor C) wird bei niedrigeren Temperaturen 200-300°C betrieben. Die Abkühlung des heißen Zwischenprodukts des dritten Reaktors B2) erfolgt bevorzugt über einen geeigneten Wärmetauschprozess. Als erster Schritt a) des erfindungsgemäßen Verfahrens sowie diesem besonders bevorzugten Vorgehen wird die Vergasung in überkritischem Wasser (SCWG) realisiert. Diese wird bei Temperaturen zwischen 550 und 700 °C durchgeführt. Der Druck wird üblicherweise im Bereich 250-350 bar eingestellt. Eine geeignete Hochdruckpumpe fördert kontinuierlich das Edukt. Diese Druckeinstellung wird erfindungsgemäß zu Schritt a) gezählt.

Die Aufheizung des Eduktstroms erfolgt über Vorwärmer und mehrere Wärmetauscher, die das höhere Temperaturniveau des Produktstroms des dritten Reaktors nutzen. Diese Aufheizung wird erfindungsgemäß zu Schritt a) gezählt.

Die fühlbare Wärme des vierten Reaktors wird ebenfalls über einen weiteren Wärmetauscher zur initialen Aufheizung des Eduktstroms genutzt.

Die Konzentration organischer Materie in der wässrigen Edukt-Lösung oder Suspension beträgt bevorzugt zwischen 5 und 20 Gew.-%, ist aber nicht auf diesen Bereich beschränkt; höhere Konzentration stellen lediglich höhere Anforderungen an das Verfahren. Durch diesen bevorzugten Konzentrationsbereich liegt die verfügbare Wasserkonzentration über 80 Gew.-%. Diese hohe Wasserkonzentration wird in den nachfolgenden Prozessschritten vorteilsbringend eingesetzt.

Anorganische Salze im Eduktstrom werden in weiteren bevorzugten Varianten während des Vergasungsschritts aus dem Reaktionsgemisch entfernt.

Sollte die wässrige Lösung oder Suspension schwefelhaltige Komponenten enthalten, werden diese bevorzugt über ein geeignetes Verfahren ebenfalls entfernt. Besonders bevorzugt kann dies im Rahmen der vorliegenden Erfindung über den Einsatz von ZnO in einem geeigneten Hochdruck-Hochtemperatur-Autoklaven erfolgen.

Gleiches gilt für eventuelle Reaktionsrückstände, meist in Form von Teeren. Diese beiden Operationen können in separaten Reaktoren (dies sind nicht die Reaktoren A), B1), B2) oder C)) erfolgen.

Für die nachfolgenden Schritte werden zum Teil noch höhere Temperaturen benötigt, in Varianten bis zu 900°C; in weniger bevorzugten, aber von der Erfindung umfassten, Varianten können noch höhere Temperaturen angewandt werden. Falls der Druck bei 250-350 bar verbleibt, stellen diese hohen Temperaturen sehr hohe Anforderungen für konventionelle Reaktorwerkstoffe bei konventionellem Reaktordesign dar. Zusätzlich wäre das Gleichgewicht von dem sehr hohen Druck eher in Richtung Kohlenwasserstoffe geschoben. Somit ist es vorteilhaft und daher erfindungsgemäß besonders bevorzugt an dieser Stelle des Prozesses den Druck auf einem niedrigeren Niveau einzustellen, in einer bevorzugten Variante auf 10 bis 50 bar (z. B. 30 bar). Dies erfolgt bevorzugt über einen geeigneten Druckregler.

Dabei wird im Rahmen der vorliegenden Erfindung dennoch ein hohes Temperaturniveau erhalten, bevorzugt über 400°C (z. B. 500°C). Dadurch wird Energie (fühlbare Wärme) gespart und Komplikationen aufgrund von Phasentrennung bei unterkritischen Temperaturen (<374°C) vermieden.

Bei der Vergasung der meisten organischen Substanzen werden nicht nur Methan, sondern auch höhere Kohlenwasserstoffe (beispielsweise C₂H₆, C₃H₈, C₂H₄, C3H6 und andere) in niedrigen Konzentrationen gebildet.

Als zweiter Schritt b1) des erfindungsgemäßen Verfahrens sowie diesem besonders bevorzugten Vorgehen wird in dem nächsten Reaktor B1) die Spaltung dieser Kohlenwasserstoffe (Pre-Reforming) durchgeführt. Dieser Reaktor bzw. Verfahrensschritt wird bevorzugt bei Temperaturen von 500-600°C betrieben und mit einem geeigneten Katalysator, bevorzugt z.B. Ni auf La₂O₃-CeO₂-ZrO₂, bestückt.

Im dritten Schritt b2) des erfindungsgemäßen Verfahrens sowie diesem besonders bevorzugten Vorgehen wird der nächste Reaktor B2) bei Temperaturen über 750°C betrieben bevorzugt 800°C bis 850°C betrieben. Bestückt mit einem entsprechenden Katalysator, bevorzugt z.B. Ni auf Al₂O₃, MgAl₂O₄, CaO und SiO₂ oder Mischungen davon, werden über die Reaktion von Methan mit dem Wasserdampf Wasserstoff und Kohlenoxide gebildet. Der sehr hohe Wasserüberschuss schiebt das Reaktionsgleichgewicht in Richtung der Produkte.

Als vierter Schritt c) des erfindungsgemäßen Verfahrens sowie diesem besonders bevorzugten Vorgehen wird das Kohlenmonoxid mit dem Wasser im nächsten Reaktor C) bei niedrigeren Temperaturen, insbesondere bevorzugt z.B. 240°C, umgesetzt. Bevorzugt wird wieder ein geeigneter Katalysator z.B. FeCr₂O₄ verwendet.

Die bei der Temperaturreduzierung freiwerdende Enthalpie wird optional über einen Wärmetauscher zur Aufheizung des Edukts wiederverwendet.

Zwar sind hier die Schritte b1) und b2) als zweiter und dritter Schritt bezeichnet - und folglich Schritt c) als vierter Schritt, jedoch ist festzuhalten, dass für den Fall, dass nur eine Reformierung b) erfolgt, diese der zweite Schritt ist und die WGS-Reaktion der dritte Schritt.

Nach diesem Prozessschritt c) besteht das Produktgemisch nur aus Wasser, Wasserstoff und CO₂. Nach Abkühlung auf Umgebungstemperatur kann das Wasser abgetrennt werden. In einigen bevorzugten Varianten wird dazu ein Autoklav mit einer Vorrichtung zur Detektion der Phasengrenze und entsprechend gesteuerten Ventilen eingesetzt. Bei der Kondensation und Abtrennung des Wassers wird der Partialdruck der Komponenten Wasserstoff und Kohlendioxid stark erhöht. Auch bei dieser Abkühlung wird bevorzugt ein Wärmetauscher eingesetzt.

Nachfolgend wird das H₂/CO₂-Gemisch bevorzugt über geeignete Methoden gespalten, besonders bevorzugt über dem Einsatz einer geeigneten Trennmembrane, oder über die Absorption des CO₂ in geeigneten flüssigen oder festen Absorbern, bevorzugt ausgewählt aus der Gruppe bestehend aus TEGDME (tetra-ethylene-glycol-dimethyl-ether), Aminen wie zum Beispiel bevorzugt aber nicht beschränkt darauf Monoisopropanolamin, 3-Amino-1-propanol, Diethanolamin, Monoethanolamin, Diglycolamin, Methyldiethanolamin, Wasser und Mischungen davon, insbesondere TEGDME, Monoethanolamin, Diglycolamin, Methyldiethanolamin und/oder Wasser. Der Wasserstoff verbleibt in einigen bevorzugten Varianten in der Gasphase in vorkomprimierter Form (z.B. 30 bar) und wird entweder direkt verwendet oder wird nachkomprimiert auf das gewünschte Niveau für den Vertrieb.

Abhängig von der Trennmethode wird das Kohlendioxid in einigen bevorzugten Varianten abgetrennt und in konzentrierter Form aufgefangen. Dabei ist es möglich, (je nach Trennmethode) den hohen Druck auch in diesem Stoffstrom aufrecht zu erhalten.

Nicht zuletzt betrifft die vorliegende Erfindung auch die Verwendung des erfindungsgemäßen Verfahrens sowie der erfindungsgemäßen Anlage. Insbesondere können diese in der Wasserstoffwirtschaft, bei der Abfallnutzung, bei der Erzeugung von regenerativen Energien und zur Erzeugung von regenerativem CO₂, der Erzeugung von Wasserstoff verwendet werden.

Zudem können sie zur Erzeugung von hochreinem Wasserstoff, bevorzugt gleichzeitig hochkonzentriertem Kohlendioxid, aus organischen Substanzen, bevorzugt organischen Abfällen und/oder Biomassen, insbesondere Abfallbiomassen.

Vorteil der vorliegenden Erfindung ist die neuartige Verzahnung von SCWG- und Reforming-Verfahren unter Beibehaltung von hohen Temperaturen und Druck. Dadurch wird eine erhebliche Einsparung von Energie für die Aufheizung und Pumpenleistung erzielt. Denn durch die erfindungsgemäße Verbindung dieser beiden Verfahren wird nur eine Pumpe am Beginn des Gesamt-Prozesses benötigt. Dabei wird nur eine nicht kompressible wässrige Lösung oder Suspension gefördert. Dies ist mit geringem Verbrauch an elektrischen Energie durchführbar. (Im Gegensatz zu der Energieaufwändigen Kompression eines Gases). Zudem wird die Nutzung der fühlbaren Wärme über interne Wärmetauscher ermöglicht.

Im Stand der Technik existierte bisher eine solche Kopplung nicht und zwischen der SCWG und weiteren Aufarbeitungen im Stand der Technik ging sehr viel Energie verloren, so dass wesentlich mehr Energie aufgewendet werden musste.

Die vorliegende Erfindung zielt mithin in einer Variante auf die direkte Erzeugung von reinem Wasserstoff und konzentriertem Kohlendioxid aus wässrigen Abfallströmen auf einem möglichst effizienten Weg und erreicht dieses Ziel.

Mit der vorliegenden Erfindung lässt sich hervorragend und effektiv hochreiner Wasserstoff, neben hohen Ausbeuten an CO₂, aus quasi beliebigen organischen Substanzen erhalten, insbesondere aus Biomassen und/oder organischen Abfällen.

Im Rahmen der vorliegenden Erfindung wird demgemäß in einem integrierten Prozess aus organischen Substanzen, bevorzugt organischen Abfällen, reiner Wasserstoff und hoch konzentriertes Kohlendioxid generiert. Werden Abfallbiomassen oder organische Abfälle als Einsatzstoff genutzt, ergibt sich zusätzlich der Vorteil der Abfallentsorgung.

Sofern nicht im jeweiligen Zusammenhang angegeben, kann der Fachmann die genaue Ausgestaltung der Reaktoren, Rohre etc. wie beispielsweise Größe, Wanddicken, Materialien etc. auf die für eine bestimmte Reaktion avisierten Reaktions- oder Durchleitungsbedingungen im Rahmen seines allgemeinen Fachwissens vornehmen.

Sofern bei der Beschreibung der erfindungsgemäßen Anlage Teile oder die ganze Anlage als "bestehend aus" gekennzeichnet sind, ist darunter zu verstehen, dass sich dies auf die genannten wesentlichen Bestandteile bezieht. Selbstverständliche oder inhärente Teile wie Leitungen, Ventile, Schrauben, Gehäuse, Messeinrichtungen, Vorratsbehälter für Edukte/Produkte etc. sind dadurch nicht ausgeschlossen. Bevorzugt aber sind andere wesentliche Bestandteile, wie dies weitere Reaktoren, o.ä. wären, die den Verfahrensablauf ändern würden, ausgeschlossen.

Entsprechendes gilt auch für die erfindungsgemäßen Verfahren und Verfahrensschritte. Wenn diese als bestehend aus dargestellt sind ist für den Fachmann klar, dass selbstverständliche Verfahrensschritte, wie die Öffnung von Ventilen, das Einschalten von Strom etc. gleichwohl mit umfasst sind. Bevorzugt aber sind andere wesentliche Verfahrensschritte, die den Verfahrensablauf ändern würden, wie weitere Reaktionen oder ähnliches, ausgeschlossen.

Die einzelnen Teile der Anlage stehen dabei in fachüblicher und bekannter Art und Weise miteinander in Wirkverbindung.

Die verschiedenen Ausgestaltungen der vorliegenden Erfindung, z.B. - aber nicht ausschließlich - diejenigen der verschiedenen abhängigen Ansprüche, können dabei in beliebiger Art und Weise miteinander kombiniert werden, sofern solche Kombinationen sich nicht widersprechen.

### Figurenbeschreibung:

Die vorliegende Erfindung wird im Folgenden mit Bezugnahme auf die Zeichnungen näher erläutert. Die Zeichnungen sind dabei nicht limitierend auszulegen und nicht maßstabsgetreu. Weiterhin enthalten die Zeichnungen nicht alle Merkmale, die übliche Anlagen aufweisen, sondern sind auf die für die vorliegende Erfindung und ihr Verständnis wesentlichen Merkmale reduziert.

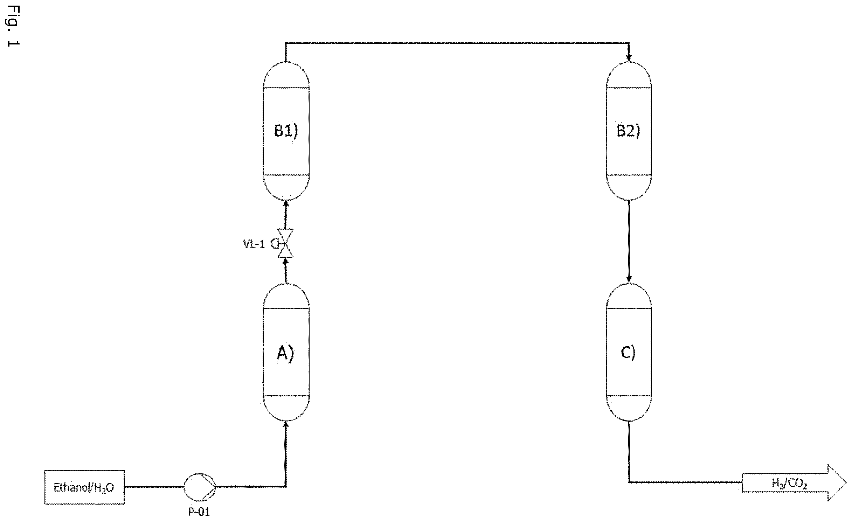

Figur 1 zeigt kurz die vier Verfahrensschritte a), b1), b2) und c) in einem stark vereinfachten Schaubild. Ausgehend von einem Wasser/Ethanol-Gemisch wird die Eduktlösung über eine entsprechende Vorrichtung, hier eine Hochdruckpumpe P-01, auf den erforderlichen Druck gebracht und in den ersten Reaktor A) geleitet, wo die SCWG abläuft (die ebenfalls erfolgende Temperaturerhöhung ist hier nicht gezeigt). Nach der SCWG wird der Druck über eine geeignete Vorrichtung VL-1 gemindert und das Gas dann in den zweiten Reaktor B1) geleitet, wo die Pre-Reformierung erfolgt. Das Produktgas wird dann weiter in den dritten Reaktor B2) geleitet, wo die Reformierung erfolgt. Anschließend wird das Daraus resultierende Gas in den vierten Reaktor C) geleitet, wo eine WGS-reaktion abläuft. Danach wir das resultierende Produktgas enthaltend H₂ und CO₂ abgeleitet und optional aufgearbeitet.

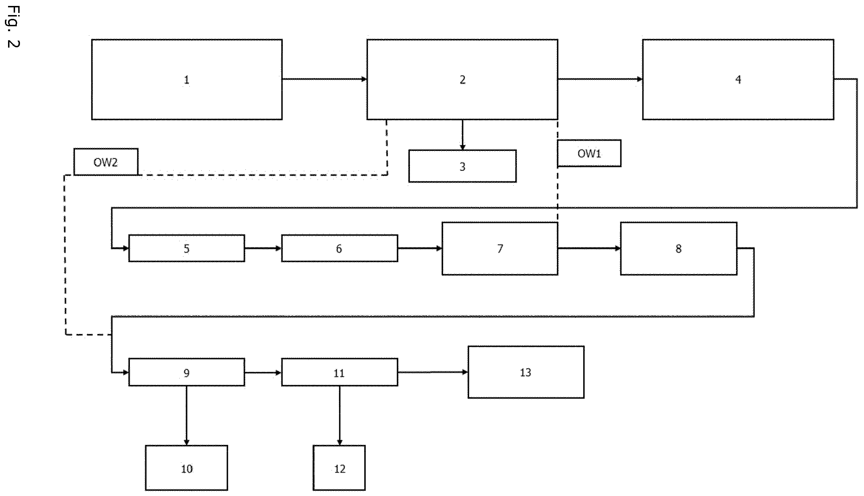

Figur 2 zeigt eine detailliertere Wiedergabe einer Variante des erfindungsgemäßen Verfahrens. Bei 1 wird das Edukt vorgelegt; hier eine wässrige Lösung oder Suspension von organischen Substanzen (z.B. Biomasse). Das Edukt wird dann der SCWG zugeleitet, wobei es über eine Vorrichtung zur Druckerhöhung und eine Aufheizvorrichtung (beide nicht explizit gezeigt) auf für die SCWG notwendigen Druck und Temperatur gebracht wird. Die SCWG findet bei 2 in einem Reaktor A) statt. Diesem Schritt ist optional eine Abtrennung für gelöste Salze bei 3 zugeordnet. Ferner ist diesem Schritt eine ebenfalls optionale Entfernung von schwefelhaltigen Substanzen und Teeren aus den Gasen bei 4 nachgeordnet. Ferner sind 2 optional die Wärmetauscher OW1 und OW2 zugeordnet, mittels derer bei dieser Variante der Erfindung im laufenden Betrieb der Anlage die Erwärmung des Edukts auf SCWG-Temperatur erzielt oder unterstützt wird. Der Wärmetauscher OW1 nutzt dabei die Wärme des Produktstroms des dritten Reaktors B2) und der Wärmetauscher OW2 die Wärme des Produktstroms des vierten Reaktors C). Die Gase werden dann weitergeleitet und bei 5 einer Druckreduzierung unterworfen. Anschließend gelangen die Gase dann bei 6 in den Reaktor B1), wo sie der Pre-Reformierung unterworfen werden. Die daraus resultierenden Abgase werden dann weitergeleitet und bei 7 ein Reaktor B2) der Reformierung unterworfen. Als nächstes werden die weitergeleiteten Gase dann bei 8 in Reaktor C) einer WGS-Reaktion unterworfen. Die dann resultierenden Produktgase können anschließend je nach dem gewünschten Verwendungszweck auf verschiedene Weise aufgearbeitet werden. Hier gezeigt ist, dass zunächst bei 9 eine Phasentrennung vorgenommen wird. Die wässrige Phase wird abgetrennt 10 und kann weiter aufgearbeitet, verworfen oder einer weiteren Verwendung zugeführt werden. In einigen bevorzugten Ausführungsformen kann das abgetrennte Wasser zurückgeführt werden und für weitere Eduktlösung genutzt werden. Das verbleibende Gas gelangt dann bei 11 in eine Vorrichtung zur CO₂-Abtrennung, woraus CO₂-Produkt 12 abgeleitet wird. Das vom CO₂ befreite Gas stellt das hochreine Wasserstoff-Produktgas 13 dar.

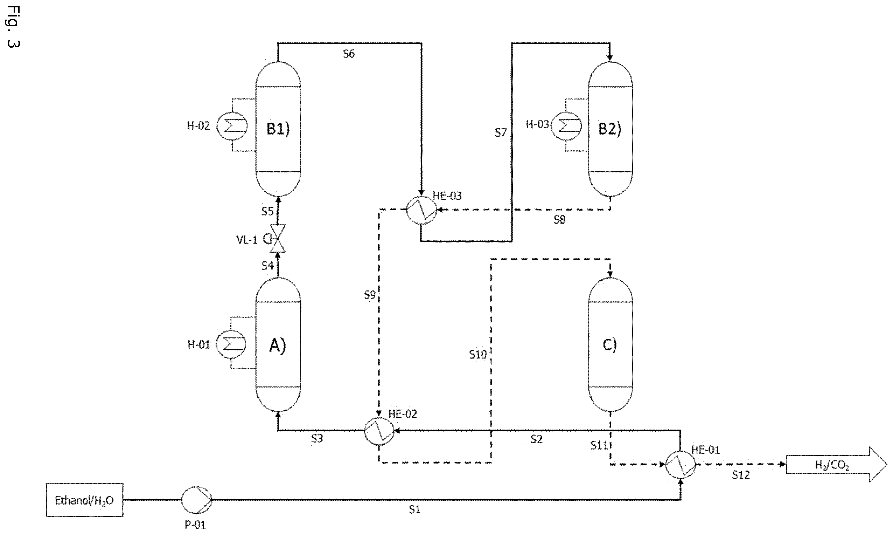

Figur 3 zeigt eine weitere erfindungsgemäße Variante, ähnlich wie Figur 1, allerdings mit eingezeichneten Wärmetauschern und Heizelementen. In Figur 3 sind die nach der Reformierung (nach Reaktor B2)) folgenden Ströme gestrichelt dargestellt; dies dient *allein* dazu, die Figur besser erkennbar zu machen, sagt aber nichts über die Ströme an sich aus. In der hier illustrierten Variante sind die Reaktoren A), B1) und B2) jeweils mit einer Heizvorrichtung (H-01, H-02, H-03) ausgestattet, welche die Reaktoren auf die jeweils notwendige Reaktionstemperatur aufheizen; die hierfür notwendige Heizleistung ist durch den Einsatz der Wärmetauscher niedriger, als ohne diese. Diese Heizvorrichtungen können aus beliebigen Quellen mit Energie versorgt werden, es ist aber bevorzugt, diese mit Energie aus regenerierbaren Quellen zu versorgen (beispielsweise geothermale Energie (zum Beispiel Erdwärme und/oder Wasser), oder elektrische Energie aus regenerativen Strom). Es ist hier illustriert, dass der Eduktstrom mittels eines Wärmetauschers HE-01, der Wärme aus dem aus Reaktor C) austretenden Strom erhält, und mittels eines Wärmetauschers HE-02, der Wärme aus dem aus Reaktor B2) austretenden Strom erhält, vor Eintritt in den Reaktor A) erwärmt wird. Ersichtlich ist, dass in dieser Variante der Erfindung der aus Reaktor B2) austretenden Strom, bevor er HE-02 erreicht, bereits in einem Wärmetauscher HE-03 einen Teil der Wärme an den Strom zwischen den Reaktoren B1) und B2) abgegeben hat, um diesen Strom vor Eintritt in B2) zu erhitzen.

### Bezugszeichenliste:

- 1: Edukt (wässrige Lösung oder Suspension von organischen Substanzen (z.B. Biomasse))
- 2: SCWG (Schritt a) - Vergasung unter den Bedingungen des überkritischen Wassers - umfassend Vorwärmer, Reaktor und zwei optionale Wärmetauscher)
- 3: optionale Salzabtrennung
- 4: optionale Entfernung von schwefelhaltigen Substanzen und Teeren
- 5: Druckreduzierung
- 6: Pre-Reformierung (Schritt b1))
- 7: (Methan-Steam-) Reformierung (Schritt b2))
- 8: Wassergas-Shift-Reaktion (Schritt c))
- 9: Phasen-Abtrennung
- 10: wässrige Phase
- 11: CO₂-Abtrennung
- 12: CO₂-Produkt
- 13: H₂-Produkt unter hohem Druck
- OW1: optionaler Wärmetauscher 1
- OW2: optionaler Wärmetauscher 2
- A): erster Reaktor betreffend den Verfahrensschritt des SCWG-Prozesses
- B1): zweiter Reaktor betreffend den Verfahrensschritt der Pre-Reformierung
- B2): dritter Reaktor betreffend den Verfahrensschritt der Reformierung
- C): vierter Reaktor betreffend den Verfahrensschritt der Wassergasshift-Reaktion
- HE-01: Wärmetauscher bei der in Figur 3/Beispiel 2 illustrierten Variante der Erfindung
- HE-02: Wärmetauscher bei der in Figur 3/Beispiel 2 illustrierten Variante der Erfindung
- HE-03: Wärmetauscher bei der in Figur 3/Beispiel 2 illustrierten Variante der Erfindung
- H-01: Heizvorrichtung bei der in Figur 3/Beispiel 2 illustrierten Variante der Erfindung
- H-02: Heizvorrichtung bei der in Figur 3/Beispiel 2 illustrierten Variante der Erfindung
- H-03: Heizvorrichtung bei der in Figur 3/Beispiel 2 illustrierten Variante der Erfindung
- P-01: Pumpe (bei der in Figur 3/Beispiel 2 illustrierten Variante der Erfindung)
- VL-1: Druckregelventil (bei der in Figur 3/Beispiel 2 illustrierten Variante der Erfindung)
- S1 bis S12: Stoffströme bei der in Figur 3/Beispiel 2 illustrierten Variante der Erfindung

### Beispiele:

Die Erfindung wird nun unter Bezugnahme auf das folgende, nicht-limitierende Beispiel weiter erläutert.

### Beispiel 1: (zur Verdeutlichung der chemischen Umsetzungen)

Im Folgenden wird eine rechnerische Simulation des gesamten Prozesses in vereinfachter Form und auf der Grundlage thermodynamischer Berechnungen gegeben. Der Einfachheit halber wurden Wärmetauscher, Vorwärmer und eventuelle Salzabtrennung nicht dargestellt bzw. berücksichtigt.

Ausgangspunkt für das Verfahren war dabei eine Ethanol-Wasser-Lösung (7.3 Gew.-%).

Dies wurde über eine Pumpe in den ersten Reaktor geleitet, wo als Schritt a) ein SCWG-Prozess bei einer Temperatur von 600°C und 250 bar Druck ablief.

Das Produkt hatte berechnet die folgende Zusammensetzung:

| ohne Wasser | | mit Wasser | |
|---|---|---|---|
| | SCWG-Produkt [Vol.-%] | | SCWG-Produkt [Vol.-%] |
| CH₄ | 29,35 | CH₄ | 2,32 |
| H₂ | 44,14 | H₂ | 3,49 |
| CO | 0,48 | CO | 0,04 |
| CO₂ | 23,34 | CO₂ | 1,85 |
| C₂H₆ | 2,57 | C₂H₆ | 0,20 |
| C₃H₈ | 0,13 | C₃H₈ | 0,01 |
| | | H₂O | 92,09 |

Das in Schritt a) erhaltene Produkt wurde dann in den zweiten Reaktor geleitet, wo als Schritt b1) eine Pre-Reformierung bei einer Temperatur von 600°C und 30 bar Druck ablief.

Das Produkt hatte berechnet die folgende Zusammensetzung:

| ohne Wasser | | mit Wasser | |
|---|---|---|---|
| | Pre-Reform ing-Prod ukt [Vol.-%] | | Pre-Reform ing-Prod ukt [Vol.-%] |
| CH₄ | 8,39 | CH₄1,15 | |
| H₂67,11H₂ | | | 9,22 |
| CO | 0,66 | CO | 0,09 |
| CO₂ | 23,83 | CO₂ | 3,28 |
| C₂H₆ | 0,00 | C₂H₆ | 0,00 |
| C₃H₈ | 0,00 | C₃H₈ | 0,00 |
| | | H₂O | 86,26 |

Das in Schritt b1) erhaltene Produkt wurde dann in den dritten Reaktor geleitet, wo als Schritt b2) eine Reformierung bei einer Temperatur von 800°C und 30 bar Druck ablief.

Das Produkt hatte berechnet die folgende Zusammensetzung:

| ohne Wasser | | mit Wasser | |
|---|---|---|---|
| | Reforming-Produkt [Vol.%] | | Reforming-Produkt [Vol.-%] |
| CH₄ | 0,05 | CH₄ | 0,01 |
| H₂ | 74,56 | H₂ | 12,80 |
| CO | 3,24 | CO | 0,56 |
| CO₂ | 22,16 | CO₂ | 3,80 |
| C₂H₆ | 0,00 | C₂H₆ | 0,00 |
| C₃H₈ | 0,00 | C₃H₈ | 0,00 |
| | | H₂O | 82,83 |

Das in Schritt b2) erhaltene Produkt wurde dann in den vierten Reaktor geleitet, wo als Schritt c) eine Wassergasshift-Reaktion bei einer Temperatur von 240°C und 30 bar Druck ablief.

Das Produkt hatte berechnet die folgende Zusammensetzung:

| ohne Wasser | | mit Wasser | |
|---|---|---|---|
| | WGS-Produkt [Vol.-%] | | WGS-Produkt [Vol.-%] |
| CH₄ | 0,05 | CH₄ | 0,01 |
| H₂ | 75,93 | H₂ | 14,63 |
| CO | 0,03 | CO | 0,01 |
| CO₂ | 23,99 | CO₂ | 4,62 |
| C₂H₆ | 0,00 | C₂H₆ | 0,00 |
| C₃H₈ | 0,00 | C₃H₈ | 0,00 |
| | | H₂O | 80,74 |

Die Aufspaltung des Wassers/Wasserstoff/Kohlendioxid Gemischs resultierend aus Schritt c) ist ein einfacher Prozess, der über verschiedene bekannte Methoden erreicht werden kann und deswegen hier nicht dargestellt wird.

### Beispiel 2: (zur Verdeutlichung der Energieflüsse im gesamten Prozess)

Dieses Beispiel illustriert eine Variante der vorliegenden Erfindung, wie sie auch in Figur 3 illustriert ist. Die nachfolgenden Ausführungen und Werte beziehen sich auf eine Anlage im Labormaßstab (3 ml/min bzw. 0,18 kg/h), jedoch ist die Skalierung auf kommerzielle Anwendungen (etwa 104 mal größer) einfach möglich.

Es wurde in diesem Beispiel gemäß der vorliegenden Erfindung vorgegangen. Die jeweiligen Stoffströme sind mit S1 bis S12 bezeichnet. Die ermittelten Drucke und Temperaturen dieser Ströme sind in der folgenden Tabelle 1 angegeben.

**Tabelle 1. Thermische Leistung der verschiedenen Stoffströme.**

| Stoffstrom | Druck [bar] | Temperatur [°C] | Thermische Energie/Zeit [W] |
|---|---|---|---|
| S1 | 250 | 20 | 0 |
| S2 | 250 | 277 | 56 |
| S3 | 250 | 360 | 86 |
| S4 | 30 | 600 | 165 |
| S5 | 30 | 524 | 165 |
| S6 | 30 | 551 | 175 |
| S7 | 30 | 800 | 204 |
| S8 | 30 | 800 | 213 |
| S9 | 30 | 553 | 184 |
| S10 | 30 | 282 | 153 |
| S11 | 30 | 290 | 153 |
| S12 | 30 | 204 | 97 |

Dabei ergaben sich folgende Leistungen für die Wärmetauscher:

| | |
|---|---|
| HE-01 | 55,68 |
| HE-02 | 30,75 |
| HE-03 | 29,36 |

In der Summe wurden über die internen Wärmetauscher ca. 116 W genutzt.

Für die Heizvorrichtungen ergaben sich folgende Leistungen:

| | |
|---|---|
| H-01 | 78,67 |
| H-02 | 9,42 |
| H-03 | 9,36 |

In der Summe verbrauchen die Heizer ca. 97 W.

Somit wurde mehr als die Hälfte der benötigten thermischen Energie, um den Prozess zu betreiben (s. Tabelle 1, Stoffstrom S8, 213 W), über die Wärmetauscher prozessintern zurückgewonnen.

Das Produkt dieses Prozesses, d. h. der S12-Strom, enthielt eine Wärmemenge, die zur Erwärmung einer zusätzlichen Wasserversorgung über einen weiteren Wärmetauscher verwendet werden könnte. Diese Leistung beträgt etwa 72 W und ist in der Lage, die Temperatur eines Wasserstroms mit einer Durchflussmenge von 0,18 kg/h von 20°C auf 180°C zu erhöhen, wenn der Strom unter einem Druck von 15 bar steht.

Wie aus den Beispielen deutlich wird, sind das erfindungsgemäße Verfahren und die erfindungsgemäß Anlage hervorragend geeignet, die der vorliegenden Erfindung zugrundeliegende Aufgabe zu lösen.

Es können mit dem erfindungsgemäßen Verfahren und der erfindungsgemäß Anlage ausgehend von organischen Substanzen hochreiner Wasserstoff und Kohlendoxid in hoher Ausbeute erzielt werden.

## Patentansprüche

1. Mehrstufiges Verfahren zur Erzeugung von Wasserstoff und Kohlendioxid aus in wässrigen Lösungen gelösten oder suspendierten organischen Substanzen, umfassend die folgenden Schritte:
a) Vergasen von organischen Substanzen in überkritischem Wasser,
b) Unterwerfen der aus a) resultierenden Produktmischung enthaltend Kohlenwasserstoffe einer Reformierung bei bis zu 900°C,
bx) Reduzieren der Temperatur des Produktes aus b)
auf Umgebungstemperatur
oder
auf niedrigstens 180°C,
**dadurch gekennzeichnet, dass** ein Teil der bei Temperaturreduzierung nach der Reformierung freiwerdenden Enthalpie für die Aufheizung des in Schritt a) eingeleiteten Eduktstroms genutzt wird.

2. Verfahren nach Anspruch 1, **dadurch gekennzeichnet, dass** die Reformierung in Schritt b) aus zwei Einzelschritten
b1) Pre-Reformierung
und anschließend
b2) Reformierung der Produktmischung aus b1)
besteht.

3. Verfahren nach Anspruch 1 oder 2, **dadurch gekennzeichnet, dass** zusätzlich anschließend
c) das Produkt aus b) bzw. b2) einer Wassergas-Shift-Reaktion bei 180°C bis 320°C unterworfen wird, und
cx) optional reduzieren der Temperatur des Produkts aus c) auf niedrigstens Umgebungstemperatur und nutzen eines Teils der bei Temperaturreduzierung nach der Wassergas-Shift-Reaktion freiwerdenden Enthalpie für die Aufheizung des in Schritt a) eingeleiteten Eduktstroms, bevorzugt mittels mindestens einen Wärmetauscher.

4. Verfahren nach einem der vorhergehenden Ansprüche, **dadurch gekennzeichnet, dass** zwischen a) und b), oder a) und b2) oder a und c) kein zusätzlicher Kompressionsschritt erfolgt.

5. Verfahren nach einem der vorhergehenden Ansprüche, **dadurch gekennzeichnet, dass** es als einen weiteren Verfahrensschritt d) das Aufarbeiten der aus b) oder c) stammenden Produktgase umfasst.

6. Verfahren nach einem der vorhergehenden Ansprüche, **dadurch gekennzeichnet**, der Aufarbeitungsschritt d) mehrere Unterschritte in der angegebenen Reihenfolge umfasst:
d1) Abkühlung des Produktgemisches aus b) oder c) auf Umgebungstemperatur und Abtrennung des Wassers,
d2) Aufspaltung des nach d1) verbleibenden H₂/CO₂-Gemisches, bevorzugt mittels Trennmembranen oder Absorption des CO₂ in geeigneten flüssigen oder festen Absorbern, und
d2a) Auffangen des CO₂ in konzentrierter Form,
d2b) Auffangen des H₂ als Gasphase in vorkomprimierter Form oder Auffangen und nachkomprimieren auf das gewünschte Niveau.

7. Anlage zur Erzeugung von Wasserstoff und Kohlendioxid aus in wässrigen Lösungen gelösten oder suspendierten organischen Substanzen umfassend die folgenden Bestandteile:
0) Kompressor und Heizvorrichtung konfiguriert zur Vorbehandlung des Eduktstroms enthaltend die organischen Substanzen und Wasser,
A) Reaktor konfiguriert zur Vergasung der organischen Substanzen in überkritischem Wasser,
B) mindestens einen Reaktor konfiguriert zur Reformierung der aus A) abgeleiteten Produktgase stromabwärts nach dem SCWG-Reaktor A) angeordnet ist,
und eine Vorrichtung, bevorzugt mindestens ein Wärmetauscher, konfiguriert zur Erwärmung des in den Reaktor A) einzubringenden Eduktstroms mittels eines Teils der nach der Reformierung verfügbaren Enthalpie des Produktstroms aus B).

8. Anlage nach Anspruch 7, **dadurch gekennzeichnet, dass** zwei Reaktoren B) für die Reformierung vorhanden sind, wobei
B1) ein erster Reaktor konfiguriert zur Durchführung einer Pre-Reformierung ist, und
B2) ein stromabwärts danach angeordneter zweiter Reaktor, konfiguriert zur Durchführung einer Reformierung der aus Reaktor B1) erhaltenen Produktmischung, ist.

9. Anlage nach Anspruch 7 oder 8, **dadurch gekennzeichnet, dass** stromabwärts nach dem Reformierungsreaktor B) oder den Reformierungsreaktoren B1) und B2) zusätzlich ein weiterer Reaktor
C) konfiguriert zur Durchführung einer Wassergas-Shift-Reaktion angeordnet ist
und optional eine Vorrichtung, bevorzugt mindestens ein Wärmetauscher, zur Erwärmung des in den Reaktor A) einzubringenden Eduktstroms mittels eines Teils der nach der Wassergas-Shift-Reaktion verfügbaren Enthalpie des Produktstroms aus C).

10. Anlage nach einem der Ansprüche 7 bis 9, **dadurch gekennzeichnet, dass** kein weiterer Kompressor vorhanden ist.

11. Anlage nach einem der Ansprüche 7 bis 9, **dadurch gekennzeichnet, dass** stromabwärts nach Reaktor C) eine Vorrichtung angeordnet ist, die konfiguriert ist, das aus C) erhaltene Gemisch aus Wasser, H₂ und CO₂ aufzuarbeiten und abzuleiten.

12. Verwendung des Verfahrens gemäß einem der Ansprüche 1 bis 6 oder der Anlage gemäß einem der Ansprüche 7 bis 11 in der Wasserstoffwirtschaft, der Abfallnutzung, bei der Erzeugung von regenerativen Energien zur Erzeugung von regenerativem CO₂, der Erzeugung von Wasserstoff.

13. Verwendung des Verfahrens gemäß einem der Ansprüche 1 bis 6 oder der Anlage gemäß einem der Ansprüche 7 bis 11 zur Erzeugung von hochreinem Wasserstoff, bevorzugt gleichzeitig hoch konzentriertem Kohlendioxid, aus organischen Substanzen, bevorzugt aus Biomassen, insbesondere Abfallbiomassen und/oder organischen Abfällen.
